# EUROPEAN PATENT APPLICATION

(11) **EP 1 548 667 A1**
(43) Date of publication of application: **29.06.2005**
(21) Application number: 03029848.3
(22) Date of filing: 24.12.2003
(51) Int. Cl.: G07F 17/16, G06F 1/00

(54) **Memory card for storing digital data content and method for handling the digital data content**

(71) Applicant: T-Mobile International AG & CO. KG, 53227 BONN (DE)
(72) Inventor: Arora, Nikesh, London SW1X OBD (GB)
(74) Representative: Riebling, Peter, Dr.-Ing.

(57) **Abstract**

The invention relates to a memory card (2) for storing digital data content (5), wherein the memory card is to be used in connection with a data processing device (1). According to the invention the memory card includes a Digital Rights Management (DRM) system. In other words the data content of the memory card is protected by using a Digital Rights Management system.

## Description

### Field of Invention

The present invention relates to a memory card for storing digital data content being used in connection with a data processing device. The invention also refers to a method for handling digital data content stored on such a memory card.

### State of the Art

Memory cards are small integrated circuit memory chips on a card that can hold digital data content in electronic format for the use in any device that is able to read the card format. Memory cards are going to be one of the ubiquitous media for mobile content and can be used in mobile phones, PCs, media players, e.g. mp3 players, digital cameras, etc. Today there exist multiple formats for such memory cards, for example Compact Flash, Multi Media Card, Smart Media and Memory Stick are the most common. Some new memory card formats may appear in the future, and the present invention includes all these present and future memory card formats. The digital data content stored on a memory card may include text, audio or video content, for example digital pictures, music files, digital books, etc.

Typically, a content owner or distributor, such as a publishing company wishes to distribute such digital content to a user or recipient in exchange for an amount of money. Such content owner would likely wish to restrict what the user can do with such distributed digital content. For example, the content owner would like to restrict the user from copying and re-distributing the content, e.g. a music file, to a second user for free. In addition, the content owner may wish to provide the user with the flexibility to purchase different types of the same content at different amounts of money. For example, the content owner may wish to allow distributed digital content to be played only a limited number of times, only for a certain total time, only on a certain type of machine, only on a certain type of media player, only by a certain type of user, etc. However, after distribution has occurred, such content owner has very little if any control over the digital content.

### Summary of Invention

It is therefore the object of the present invention for providing a memory card for storing digital data content being used in connection with a data processing device, which supports an individual protection of the data content.

This object is achieved by providing a memory card with the features of claim 1.
A method for handling digital data content on a memory card being used in connection with a data processing device is disclosed in claim 15.
Preferred and advantageous embodiments of the invention are disclosed in the dependent claims.

According to the invention the memory card includes or supports a Digital Rights Management (DRM) system. In other words the data content of the memory card is protected by using the DRM system.

In a preferred embodiment of the invention the memory card may include one or more memory sections, wherein the data content of at least one of these memory sections is protected by the DRM system. The digital data content stored on the memory card may include text, audio or video content. Also it could comprise computer software, games, etc.

In another embodiment of the invention, the data processing device include means for communicating via at least one telecommunications network. The telecommunications network may be any public or private network, preferably the Internet, a mobile network or a wireless network (WLAN).The data processing device may be a personal computer connected to the Internet, or a mobile data processing device, preferably a mobile communication device in form of a cellular phone. The digital data content is provided from a content provider and transmitted to the data processing device via the telecommunications network.
On the other hand, the digital data content may already be present on the memory card. There could be memory cards which already include digital music files, similar to a compact disk, which can be bought by the user in a regular way.

The rights in the data content are allowed and controlled by a Digital Rights Management authority, which can be a associated with the telecommunications network and/or can be operated and controlled by the telecommunications network operator. Preferably the rights in the data content granted to the user may include the right for reading, writing, modifying, copying or deleting the digital data content.

In yet another advantageous embodiment of invention, the digital data content on the memory card is associated with an individual digital key which enforces rights in the digital data content and is communicated between the DRM authority, the data processing device and the memory card via the telecommunications network. The digital key can be either associated with the identity of a user or associated with an individual identity number of the data processing device, or a combination of both.

The DRM system is based on hardware and/or software components included in the memory card, the data processing device and/or the DRM authority.

Advantageously, the present invention describes a system and a method for enforcing rights in digital content provided on memory cards. The invention allows the user to access encrypted digital content only in accordance with parameters specified by a digital rights management authority.

### Example of an Embodiment of Invention

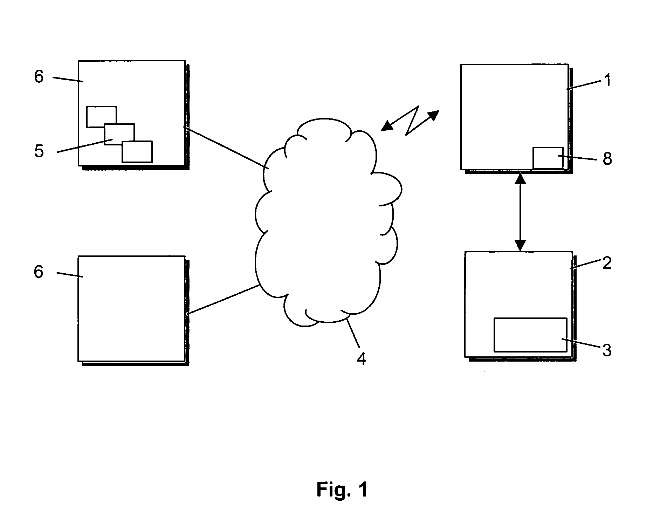

Referring to Figure 1, let us assume that an user with a cellular phone 1 which has an interface for a memory card 2. The user can be identified by his Subscriber Identity Module (SIM) which is required for operating the cellular phone 1. The memory card 2 includes a memory section 3 protected by a DRM system. Within a mobile communications systems 4 the user can download digital content, for example songs and music files 5 from a content provider 6, i.e. an online music provider, into his/her cellular phone. After connecting to the mobile network 4, the cellular phone 1 connects to a music server and displays details of the available music files and gives the choice of either listening to a sample of the song or downloading it into the cellular phone 1. The user can store the music files in the DRM section 3 of the memory card 2. For each file to be downloaded and stored, the user has to pay a certain amount of money. After downloading and storing the music file 5 it can be played back on the cellular phone 1. However, the user may buy a memory card on which the music file is already stored.

According to the invention the music file 5 stored in the memory card section 3 is protected with a DRM system. The DRM system prevents music files stored in the memory card section 3 being copied from to additional computers or shared online, etc. However, the DRM system may allow copying but prevents playing back the copied content without a registered key. Nevertheless, the memory card can be removed from the player and inserted into a personal computer to allow the user to listen to music file on his/her PC.

When the user attempts to render the digital content stored on the memory card section 3 on his cellular phone 1, an application provided on the memory card 2 invokes a DRM process on the cellular phone. If the user is attempting to render the music file 5 for the first time, the DRM system either connects the user to a Digital Rights Management authority 7 to obtain the permission or right to render such digital content, or obtains such rights from such authority 7 without any action necessary on the part of the user. The permission may include a digital key 8 associated with the identity of the user and a description of the rights, e.g. read, copy, etc., conferred by the authority 7 and related conditions, e. g. begin date, expiration date, number of plays, etc.

In fact, there are preferably three possible scenarios regarding protection:
a) Locking the data content to a specific device 2 hosting the memory card 1. This means that the data content can be copied to other devices but cannot be read or played back until a key is bought for the new device.
b) Locking the data content to an individual person. Preferably the data content may be associated with a specific digital identity or a specific SIM card owner which can be identified by his SIM card.
c) Locking the data content to the memory card 2 itself. For this, each memory card must have a unique serial number. Preferably, the serial numbers are centrally administered within the Digital Rights Management authority 7.

It is also possible to have a memory card 2 functioning like a Compact Disk (CD), i.e., a compilation of tracks on a memory card. The memory card would be used like a CD, but the product will ensure that content on the memory card, i.e. songs or music files, are protected from copying with a DRM method using network operator authentication to allow and control rights. The content will be playable on devices accepting the memory card support. As a general description, songs will be encrypted and only playable by users having the key corresponding to their Identity, e.g. the Mobile Subscriber International ISDN Number (MSISDN) or the device number of the cellular phone.

## Claims

1. Memory card (2) for storing digital data content (5), wherein the memory card is to be used in connection with a data processing device (1),
**characterized in that** it includes or supports a Digital Rights Management (DRM) system.

2. Memory card according to claim 1, **characterized in that** it includes one or more memory sections (3).

3. Memory card according to claim 2, **characterized in that** data content of at least one of these memory sections (3) is protected by the Digital Right Management system.

4. Memory card according to any of the preceding claims, **characterized in that** rights are allowed and controlled by a digital rights management authority (6).

5. Memory card according to claim 4, **characterized in that** the Digital Rights Management authority (6) is associated with a telecommunications network (4).

6. Memory card according to any of the preceding claims, **characterized in that** the data processing device (1) include means for communicating via at least one telecommunications network (4).

7. Memory card according to any of the preceding claims, **characterized in that** the data processing device (1) is a mobile data processing device.

8. Memory card according to any of the preceding claims, **characterized in that** the data processing device (1) is a mobile communication device.

9. Memory card according to any of the preceding claims, **characterized in that** the digital data content (5) is associated with an individual digital key (8) that enforces rights in the digital data content.

10. Memory card according to claim 9, **characterized in that** the digital key (8) is associated with the identity of a user.

11. Memory card according to claim 9, **characterized in** hat the digital key (8) is associated with an individual identity number of the data processing device (1 ).

12. Memory card according to any of the preceding claims, **characterized in that** the rights include the right for reading, writing, modifying, copying or deleting the digital data content.

13. Memory card according to any of the preceding claims, **characterized in that** the digital data content is provided from a content provider (6).

14. Memory card according to any of the preceding claims, **characterized in that** the Digital Rights Management system is based on hardware and/or software.

15. Method for handling digital data content (5) stored in a memory card (2) which is to be used in connection with a data processing device (1),
**characterized in that** the data content is protected by a digital rights management (DRM) system.

16. Method according to claim 15, **characterized in that** the data processing device communicates with a content provider (6) providing the digital data content (5).

17. Method according to claim 15 or 16, **characterized in that** the data processing device (1) communicates with a digital rights management authority (7) enforcing rights in the digital data content (5).

18. Method according to any of claims 15-17, **characterized in that** the data processing device communicates with the content provider and/or the Digital Rights Management authority via telecommunications network, preferably a mobile telecommunications network (4).
